# FASCICULE DE BREVET EUROPEEN

(11) **EP 3 124 822 B1**
(45) Date de publication et mention de la délivrance du brevet: **14.02.2018**
(21) Numéro de dépôt: 16180959.5
(22) Date de dépôt: 25.07.2016
(51) Int. Cl.: F16F 7/10

(54) **DISPOSITIF DE CONTRÔLE VIBRATOIRE ACTIF**
VORRICHTUNG ZUR AKTIVEN SCHWINGUNGSKONTROLLE
ACTIVE VIBRATION CONTROL DEVICE

(30) Priorité: 27.07.2015 FR 1557129
(43) Date de publication de la demande: 01.02.2017
(73) Titulaire: HUTCHINSON, 75008 Paris (FR)
(72) Inventeur: GASTINEAU, Jean-Luc, 28220 DOUY (FR)
(74) Mandataire: Cabinet Plasseraud

(56) Documents cités:
- EP-A1- 2 458 243
- FR-A1- 2 765 647
- US-A- 4 285 054
- US-A1- 2010 073 890
- US-A1- 2011 249 352

## Description

### DOMAINE DE L'INVENTION

La présente invention est relative aux dispositifs de contrôle vibratoire actifs, notamment pour véhicules.

### ARRIERE-PLAN DE L'INVENTION

Plus particulièrement, l'invention concerne un dispositif de contrôle vibratoire actif, comprenant :
- une armature comprenant au moins une partie magnétiquement perméable,
- un équipage mobile comportant une bobine s'étendant autour d'un axe de déplacement et associée à une carcasse magnétiquement perméable, montée coulissante par rapport à l'armature selon l'axe de déplacement,
- au moins un ressort reliant l'armature à l'équipage mobile, ledit ressort sollicitant l'équipage mobile vers une position de repos,
la bobine et la carcasse étant configurées pour que, lorsque la bobine est parcourue par un courant variable, elle génère un champ magnétique adapté pour déplacer l'équipage mobile selon l'axe de déplacement en générant ainsi des vibrations.

Un exemple de dispositif de ce type est décrit par exemple dans le document EP1521352A1.

Les dispositifs de ce type, sont particulièrement avantageux, parce que la masse de la bobine et de la carcasse est mise à profit pour la génération de vibrations, puisque l'équipage mobile a besoin d'être relativement lourd à cet effet. En particulier, la masse totale du dispositif de contrôle vibratoire actif est moindre que lorsque la bobine et la carcasse sont fixes et l'armature mobile.

Ces dispositifs de contrôle vibratoire actif connus présentent toutefois l'inconvénient que le câble d'alimentation électrique de la bobine, est mobile avec la bobine selon l'axe de déplacement. Pour garantir la durée de vie du système et donc assurer la tenue en fatigue du câble et de ses connexions, celui-ci est généralement disposé en forme de boucle. Afin de minimiser les contraintes dans le câble lorsque la bobine est en mouvement, cette boucle doit être réalisée avec un câble souple et léger mais surtout être suffisamment longue et de grand rayon de courbure. Le dispositif est de fait encombrant, ce qui rend difficile l'implantation du dispositif sur véhicule et empêche l'intégration du dispositif dans un boîtier fixe.

Le document FR1557129 décrit également un dispositif antivibratoire du type susmentionné, dans lequel l'armature comporte un circuit d'alimentation électrique. Ce dispositif antivibratoire est toutefois complexe. Le document FR2765647, considéré comme le plus pertinent, décrit le préambule de la revendication 1.

### OBJETS DE L'INVENTION

La présente invention a notamment pour but de pallier ces inconvénients.

A cet effet, selon l'invention, un dispositif de contrôle vibratoire actif du genre en question, est caractérisé en ce que le ressort comporte un corps élastique en matériau électriquement isolant et au moins un circuit conducteur rapporté sur le corps élastique, reliant ledit circuit d'alimentation électrique à la bobine.

Grâce à ces dispositions, on évite l'utilisation d'un câble souple pour alimenter la bobine, et on peut ainsi réduire l'encombrement du dispositif de contrôle vibratoire actif.

On notera que les vibrations générées par le générateur de vibrations peuvent être notamment conçues:
- pour atténuer les vibrations venant d'un organe vibrant, comme enseigné par exemple dans le document FR2860564 ou, dans un autre exemple, en faisant en sorte de minimiser les vibrations dues au moteur dans l'habitacle du véhicule,
- et/ou pour créer des sons supplémentaires entendus à l'intérieur de l'habitacle et/ou à l'extérieur, par exemple pour créer artificiellement une sonorité d'un moteur autre que celui du véhicule, comme enseigné par exemple par le document EP0469023 ou le document WO2006/097188.

Dans divers modes de réalisation du dispositif de contrôle vibratoire selon l'invention, on peut éventuellement avoir recours en outre à l'une et/ou à l'autre des dispositions suivantes :
- ledit circuit conducteur rapporté est un circuit imprimé ;
- ledit matériau électriquement isolant est un matériau composite comportant des fibres noyées dans une résine ;
- l'armature est entourée par la carcasse, le ressort présente une forme sensiblement annulaire ayant une périphérie intérieure solidarisée à l'armature et une périphérie extérieure solidarisée à la carcasse, et ledit circuit conducteur s'étend entre une première extrémité voisine de la périphérie intérieure et reliée au circuit d'alimentation électrique, et une deuxième extrémité voisine de la périphérie extérieure et reliée à la bobine ;
- le ressort comporte deux circuits conducteurs indépendants, reliant le circuit d'alimentation électrique à la bobine ;
- le ressort est sensiblement plat.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective illustrant un exemple de dispositif de contrôle vibratoire selon une forme de réalisation de l'invention,
- la figure 2 est une vue en perspective et en coupe verticale du dispositif du dispositif de contrôle vibratoire de la figure 1,
- et la figure 3 est une vue en plan d'un des ressorts du dispositif de la figure 2.

### DESCRIPTION PLUS DETAILLEE

Sur les différentes figures, les mêmes références désignent des éléments identiques ou similaires.

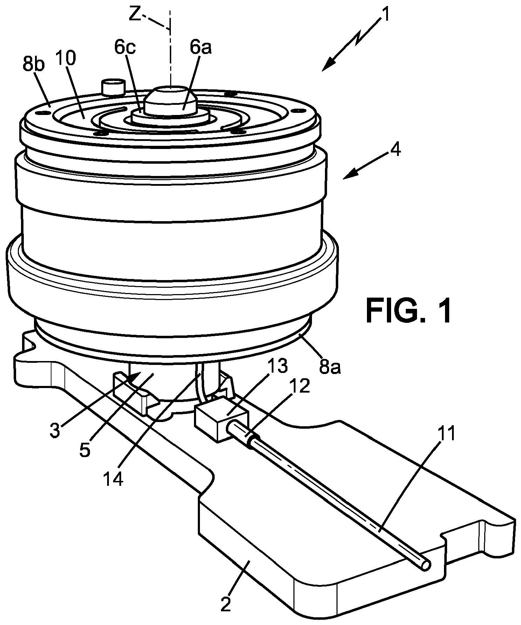

La figure 1 représente un dispositif de contrôle vibratoire actif 1, destiné à être monté par exemple dans un véhicule automobile.

Le dispositif de contrôle vibratoire actif 1 peut être monté sur un support 2, par exemple solidaire de la caisse du véhicule, et peut comporter :
- une armature 3 solidaire du support 2,
- un équipage mobile 4 montée coulissant par rapport à l'armature 3 selon un axe de déplacement Z pouvant être par exemple sensiblement vertical.

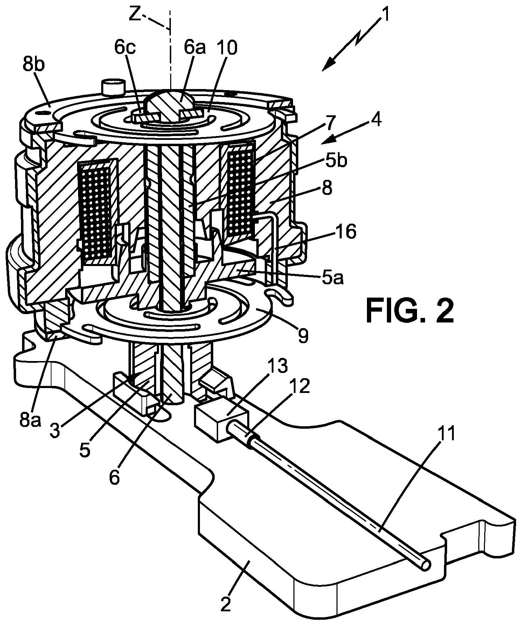

Comme représenté sur la figure 2, l'armature 3 peut comporter une partie magnétiquement perméable 5b disposée dans l'équipage mobile, et dont l'utilité sera vue plus loin.

Plus spécifiquement, l'armature 3 peut comporter par exemple :
- une tige centrale 6 rigide s'étendant selon l'axe Z et solidarisée au support 2,
- une première entretoise 5 rigide entourant la tige centrale 6 et reposant sur le support 2,
- la partie magnétiquement perméable 5a susmentionnée, entourant la tige centrale 6 au-dessus de l'entretoise 5,
- une deuxième entretoise rigide 5b entourant la tige centrale 6 et reposant sur la partie magnétiquement perméable 5a, Cette deuxième entretoise 5b étant retenue sur la tige centrale par une tête élargir 6a formée à l'extrémité libre de la tête 6.

L'équipage mobile 4 comporte une bobine électrique 7 s'étendant autour de l'axe de déplacement Z et montée dans une carcasse magnétiquement perméable 8, montée coulissante sur la deuxième entretoise 5b selon l'axe de déplacement Z. La bobine 7 et la carcasse entourent l'armature 3.

De plus, l'équipage mobile est relié à l'armature 3 par au moins un ressort, par exemple des premiers et deuxième ressorts 9, 10 sollicitant l'équipage mobile 4 vers une position de repos. Les ressorts 9, 10 peuvent notamment être des ressorts plats d'étendant sensiblement radialement par rapport à l'axe Z.

Plus spécifiquement, un premier ressort 9 annulaire peut être disposé autour de la tige centrale 6 avec sa périphérie intérieure montée serrée entre la première entretoise 5 et la partie magnétiquement perméable 5a.

La périphérie extérieure du premier ressort 9 peut être solidarisée à la carcasse 8, par exemple à l'aide d'une bague 8a vissée sous la carcasse 8 de façon que la périphérie extérieure du premier ressort 9 soit serrée entre la bague 8a et la carcasse 8.

Un deuxième ressort 10 annulaire peut être disposé autour de la tige centrale 6 avec sa périphérie intérieure montée serrée entre la deuxième entretoise 5b et la tête élargie 6a de la tige centrale, avec éventuellement interposition d'une rondelle 6b entre la tête élargie 6a et le deuxième ressort 10.

La périphérie extérieure du deuxième ressort 10 peut être solidarisée à la carcasse 8, par exemple à l'aide d'une bague 8b vissée sur la carcasse 8 de façon que la périphérie extérieure du deuxième ressort 10 soit serrée entre la bague 8b et la carcasse 8.

La bobine 7, la carcasse 8 et la partie magnétiquement perméable 5a de l'armature sont configurées pour que, lorsque la bobine est parcourue par un courant variable, elle génère un champ magnétique adapté pour déplacer l'équipage mobile 4 selon l'axe de déplacement Z en générant ainsi des vibrations.

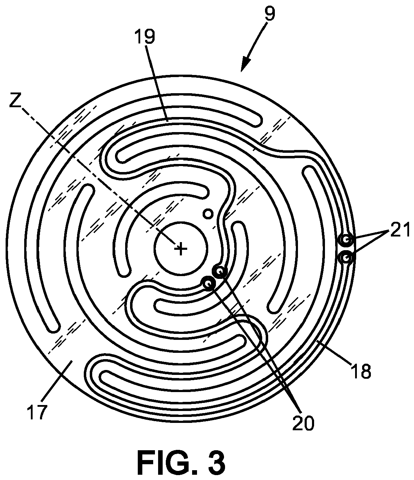

La bobine 7 est alimentée électriquement par le véhicule, de façon connue en soi, par exemple par un câble 11 ayant un connecteur 12 raccordé sur un connecteur complémentaire 13 fixé au support 2 (figures 2 et 3). Le connecteur 13 est relié à un circuit d'alimentation électrique 14 solidaire de l'armature 3. Ce circuit d'alimentation électrique 14 peut simplement consister en un câble ou des pistes électriquement conductrices, ou éventuellement comporter des composants électroniques.

Le circuit d'alimentation électrique 14 est relié à la bobine 7 par au moins une partie conductrice 18, 19 d'au moins un des ressorts 9, 10, par exemple le premier ressort.

Eventuellement, la bobine 7 peut être reliée à ladite au moins une partie conductrice 18, 19 par des fils conducteurs 16.

Eventuellement, ladite au moins une partie conductrice 18, 19 peut être reliée au circuit d'alimentation électrique 14 au voisinage de la périphérie intérieure du ressort 9, et la bobine 7 peut être reliée ladite au moins une partie conductrice 18, 19 au voisinage de la périphérie extérieure du ressort 9.

Comme représenté sur la figure 3, le ressort 9 peut comporter un corps élastique 17 en matériau électriquement isolant et au moins un circuit conducteur 18, 19 rapporté sur le corps élastique 17, par exemple sous la forme d'un circuit imprimé. Ledit matériau électriquement isolant peut être un matériau composite comportant des fibres noyées dans une résine (fibres de verre, de carbone, de basalte ou autre).

De préférence, le ressort 9 comporte deux circuits conducteurs 18, 19 distincts et isolés l'un de l'autre.

Chaque circuit conducteur 18, 19 peut comporter un métal ou alliage conducteur, ou une encre conductrice. Il peut être déposé à la surface du corps élastique 17 ou sur une couche intermédiaire.

Chaque circuit conducteur 18, 19 peut s'étendre entre deux extrémités formant des contacts, un contact radialement intérieur 20 adapté pour se connecter au circuit d'alimentation 14 par soudure ou simple contact, et un contact radialement extérieur 21 adapté pour se connecter à la bobine 7 par soudure ou simple contact.Les deux circuits conducteurs 18, 19 peuvent être sur une même face du ressort 9.

Eventuellement, les contacts 20, 21 ou l'un d'entre eux pourrait être remplacé par un connecteur.

Eventuellement, un ou des composants électroniques pourraient être soudés sur les circuits conducteurs 18, 19.

## Revendications

1. Dispositif de contrôle vibratoire actif, comprenant :
- une armature (3) comprenant au moins une partie (5a) magnétiquement perméable,
- un équipage mobile (4) comportant une bobine (7) s'étendant autour d'un axe de déplacement (Z) et associée à une carcasse (8) magnétiquement perméable, montée coulissante par rapport à l'armature (3) selon l'axe de déplacement (Z),
- au moins un ressort (9) reliant l'armature (3) à l'équipage mobile (4), ledit ressort sollicitant l'équipage mobile (4) vers une position de repos,
la bobine (7) et la carcasse (8) étant configurées pour que, lorsque la bobine (7) est parcourue par un courant variable, elle génère un champ magnétique adapté pour déplacer l'équipage mobile (4) selon l'axe de déplacement (Z) en générant ainsi des vibrations,
l'armature (3) comportant un circuit d'alimentation électrique (14),
**caractérisé en ce que** le ressort (9) comporte un corps élastique (17) en matériau électriquement isolant et au moins un circuit conducteur (18, 19) rapporté sur le corps élastique (17), reliant ledit circuit d'alimentation électrique (14) à la bobine (7).

2. Dispositif de contrôle vibratoire actif selon la revendication 1, dans lequel ledit circuit conducteur (18, 19) est un circuit imprimé.

3. Dispositif de contrôle vibratoire actif selon la revendication 1 ou la revendication 2, dans lequel ledit matériau électriquement isolant est un matériau composite comportant des fibres noyées dans une résine.

4. Dispositif de contrôle vibratoire actif selon l'une quelconque des revendications précédentes, dans lequel l'armature (3) est entourée par la carcasse (8), le ressort (9) présente une forme sensiblement annulaire ayant une périphérie intérieure solidarisée à l'armature (3) et une périphérie extérieure solidarisée à la carcasse (8), et ledit circuit conducteur (18, 19) s'étend entre une première extrémité (20) voisine de la périphérie intérieure et reliée au circuit d'alimentation électrique (14), et une deuxième extrémité (21) voisine de la périphérie extérieure et reliée à la bobine (7).

5. Dispositif de contrôle vibratoire actif selon l'une quelconque des revendications précédentes, dans lequel le ressort (9) comporte deux circuits conducteurs (18, 19) indépendants, reliant le circuit d'alimentation électrique (14) à la bobine (7).

6. Dispositif de contrôle vibratoire actif selon l'une quelconque des revendications précédentes, dans lequel le ressort (9) est sensiblement plat.

## Patentansprüche

1. Vorrichtung zur aktiven Schwingungsregulierung, umfassend:
- ein Gestell (3), umfassend wenigstens einen magnetisch permeablen Abschnitt (5a),
- ein bewegliches Teil (4), umfassend eine Spule (7), die sich um eine Verlagerungsachse (Z) erstreckt und einem magnetisch permeablen Gerüst (8) zugeordnet ist, das in Bezug auf das Gestell (3) entlang der Verlagerungsachse (Z) verschiebbar angebracht ist,
- wenigstens eine Feder (9), welche das Gestell (3) mit dem beweglichen Teil (4) verbindet, wobei die Feder das bewegliche Teil (4) zu einer Ruheposition hin drängt,
wobei die Spule (7) und das Gerüst (8) dazu konfiguriert sind, dass dann, wenn die Spule (7) von einem variablen Strom durchflossen wird, diese ein Magnetfeld erzeugt, das dazu angepasst ist, das bewegliche Teil (4) entlang der Verlagerungsachse (Z) zu verlagern und auf diese Weise Schwingungen zu erzeugen, wobei das Gestell (3) einen elektrischen Versorgungsschaltkreis (14) umfasst, **dadurch gekennzeichnet, dass** die Feder (9) einen elastischen Körper (17) aus einem elektrisch isolierenden Material umfasst und wenigstens einen auf den elastischen Körper (17) aufgebrachten Leiterschaltkreis (18, 19) umfasst, der den elektrischen Versorgungsschaltkreis (14) mit der Spule (7) verbindet.

2. Vorrichtung zur aktiven Schwingungsregulierung nach Anspruch 1, wobei der Leiterschaltkreis (18, 19) ein aufgedruckter Schaltkreis ist.

3. Vorrichtung zur aktiven Schwingungsregulierung nach Anspruch 1 oder Anspruch 2, wobei das elektrisch isolierende Material ein Verbundmaterial ist, welches in einem Harz/Kunstharz getränkte Fasern umfasst.

4. Vorrichtung zur aktiven Schwingungsregulierung nach einem der vorhergehenden Ansprüche, wobei das Gestell (3) von dem Gerüst (8) umgeben ist, wobei die Feder (9) eine im Wesentlichen ringförmige Form aufweist, mit einem Innenumfang, der fest mit dem Gestell (3) verbunden ist, und mit einem Außenumfang, der fest mit dem Gerüst (8) verbunden ist, und wobei der Leiterschaltkreis (18, 19) sich zwischen einem ersten Ende (20), welches dem Innenumfang benachbart und mit dem elektrischen Versorgungsschaltkreis (14) verbunden ist, und einem zweiten Ende (21) erstreckt, welches dem Außenumfang benachbart und mit der Spule (7) verbunden ist.

5. Vorrichtung zur aktiven Schwingungsregulierung nach einem der vorhergehenden Ansprüche, wobei die Feder (9) zwei unabhängige Leiterschaltkreise (18, 19) umfasst, welche den elektrischen Versorgungsschaltkreis (14) mit der Spule (7) verbinden.

6. Vorrichtung zur aktiven Schwingungsregulierung nach einem der vorhergehenden Ansprüche, wobei die Feder (9) im Wesentlichen flach ist.

## Claims

1. Active vibratory control device, comprising:
- an armature (3) comprising at least one magnetically permeable part (5a),
- a movable element (4) comprising a coil (7) extending around a movement axis (Z) and associated with a magnetically permeable carcass (8) mounted so as to slide with respect to the armature (3) along the movement axis (Z),
- at least one spring (9) connecting the armature (3) to the movable element (4), said spring urging the movable element (4) towards an idle position,
the coil (7) and the carcass (8) being configured so that, when the coil (7) has a variable current passing through it, it generates a magnetic field suitable for moving the movable element (4) along the movement axis (Z), thus generating vibrations,
the armature (3) comprising an electrical supply circuit (14),
**characterised in that** the spring (9) comprises an elastic body (17) made from electrically insulating material and at least one conductive circuit (18, 19) attached to the elastic body (17), connecting said electrical supply circuit (14) to the coil (7).

2. Active vibratory control device according to claim 1, in which said conductive circuit (18, 19) is a printed circuit.

3. Active vibratory control device according to claim 1 or claim 2, in which said electrically insulating material is a composite material comprising fibres embedded in a resin.

4. Active vibratory control device according to any one of the preceding claims, in which the armature (3) is surrounded by the carcass (8), the spring (9) has a substantially annular shape having an internal periphery secured to the armature (3) and an external periphery secured to the carcass (8), and said conductive circuit (18, 19) extends between the first end (20) adjacent to the internal periphery and connected to the electrical supply circuit (14), and a second end (21) adjacent to the external periphery and connected to the coil (7).

5. Active vibratory control device according to any one of the preceding claims, in which the spring (9) comprises two independent conductive circuits (18, 19), connecting the electrical supply circuit (14) to the coil (7).

6. Active vibratory control device according to any one of the preceding claims, in which the spring (9) is substantially flat.
